# EUROPEAN PATENT APPLICATION

(11) **EP 3 312 125 A1**
(43) Date of publication of application: **25.04.2018**
(21) Application number: 16382475.8
(22) Date of filing: 19.10.2016
(51) Int. Cl.: B66B 5/12, B66B 7/06

(54) **ELEVATOR SYSTEMS**

(71) Applicant: AIP APS, 3400 Hillerød (DK)
(72) Inventor: LEGUA, Carlos, 50015 ZARAGOZA (ES)
(74) Representative: ZBM Patents ApS

(57) **Abstract**

An elevator system is disclosed that comprises an elevator cabin guided by or around one or more substantially rigid guiding elements, a travelling cable, a pulley mounted on a pulley frame, wherein the pulley with the pulley frame is movably suspended on the travelling cable, and one or more transverse elements. The transverse element extends from a first end attached to the pulley frame to a second end configured to be slidably arranged with respect to one or more of the rigid guiding elements. The elevator system further comprises an arresting system provided at or near the second end of the transverse elements. The arresting system is configured to apply friction on the rigid guiding elements to reduce sliding of the transverse elements with respect to the rigid guiding elements when the pulley with the pulley frame is not suspended by the travelling cable.

## Description

The present disclosure relates to elevator systems, particularly elevator systems having a travelling cable. For example, service elevator systems configured for use in wind turbine towers. The present disclosure further relates to wind turbines comprising such elevator systems.

### BACKGROUND

Modern wind turbines are commonly used to supply electricity into the electrical grid. Wind turbines generally comprise a rotor with a rotor hub and a plurality of blades. The rotor is set into rotation under the influence of the wind on the blades. The rotation of the rotor shaft drives the generator rotor either directly ("directly driven") or through the use of a gearbox. The operation of the generator produces the electricity to be supplied into the electrical grid.

When maintenance works are required inside wind turbines, hoists are often used in the form of elevator-like structures where a lift platform or a cabin for the transportation of people and/or equipment is hoisted up and down within the wind turbine tower. Wind turbines are often provided with working platforms arranged at various altitudes along the height of the tower with the purpose of allowing workers to leave the cabin and inspect or repair equipment where intended or needed. These sorts of elevator systems are also known in other applications, such as e.g. factories, construction sites, and all sorts of towers.

Elevator systems in general include an elevator car or cabin that is suspended within a hoistway or elevator shaft by wire ropes or any other relatively thick cable. In some systems, e.g. for some electric elevators, a counterweight may be provided, depending *inter alia* on the available space. Other systems such as hydraulic elevators normally do not comprise a counterweight. Typically, elevator systems include a moving, trailing or travelling cable for supplying electric power to the elevator cabin and/or for signal communication between components associated with the elevator cabin and a control panel provided in a fixed location relative to the hoistway or elevator shaft. Such a control panel may be provided at any height up in the elevator shaft.

Different ways of driving elevator systems are known. Examples of driving systems may use one or more traction wire ropes in combination with a traction sheave driven by e.g. a motor. Alternatively, the driving system may be defined by a rack and pinion engagement. In these cases, the rack is usually provided along the elevator shaft and the pinion is usually arranged in the elevator cabin and a motor for driving the pinion may be mounted in or on the elevator cabin.

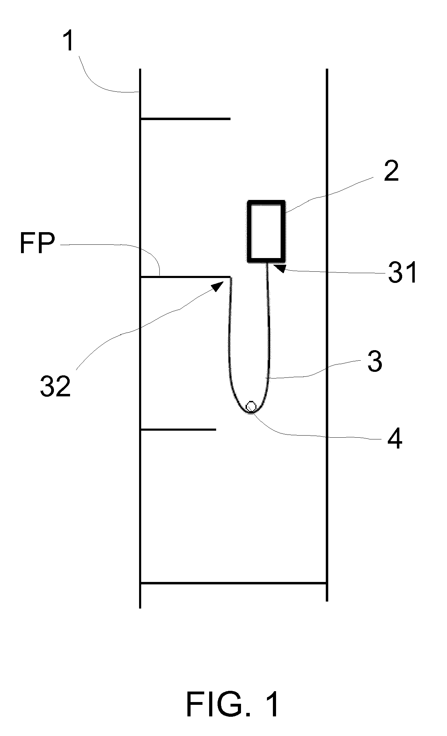

As mentioned before, elevator systems may be provided with a travelling cable. The travelling cable is to be understood as a cable suspended on one end from a fixed point of the elevator path/shaft (usually midway up the tower) and on the other end from the elevator cabin. In between the elevator cabin and the fixation along the tower, the cable may be passed around a pulley system. Reference may be had to figure 1. The pulley contributes to add tension to the travelling cable. The travelling cable is therefore always hanging, both during movement of the elevator and when the elevator is still at e.g. a bottom parking position.

Wind turbines are high slender structures that are usually supported by a closed tower. The cables of a wind turbine elevator system are thus protected from outside atmospheric conditions. Nevertheless, due to wind forces, the high and slender tower may oscillate significantly. Wind forces may further be increased by rotor rotation and become even higher in offshore wind turbines wherein wind forces are further increased by forces exerted by waves, currents and tides. The travelling cable may thus also begin to move and sway within the elevator shaft of a wind turbine tower. The travelling cable can thus become tangled up in itself. This is most prominent in higher and more powerful wind turbines, e.g. MW class.

For these reasons, it is desirable that elevator cabins arranged inside wind turbine towers run controlled by e.g. taut lines, cables, a rail, a ladder or any other rigid guiding element extending all the way from the top to the bottom of the wind turbine tower (elevator shaft).

Some known elevator systems provided with a travelling cable may also comprise transverse arms attached to the pulley frame holding the pulley in order to aid stabilizing the travelling cable position even when loads producing vibration and sway of the travelling cable are acting. Document EP2826742 describes such systems. In this case, the transverse arms are configured to be slidably arranged with respect to the rigid guiding elements in order to ensure the provision of a space between the rigid guiding elements and the pulley (and pulley frame) that slides on the travelling cable. In elevator systems driven by a rack and pinion engagement, the rack may be used as a guiding rail for the transverse elements. In elevator systems having a ladder provided along the elevator shaft, side rails of the ladder may be used as guiding rails for the transverse element.

However, there may be circumstances e.g. in the event the travelling cable breaks or it gets unhooked in one end, in which the travelling cable pulley can fall down the elevator shaft. The transverse arms in this case can slide rather rapidly down along the rigid guiding elements of the elevator cabin. A travelling cable pulley (and pulley frame) falling down from up high can be dangerous e.g. for maintenance people that may be working below, and furthermore can damage components or systems along the tower.

As such there is a need for safe, reliable and effective elevator systems that are able to avoid or at least reduce the risk of a travelling cable pulley falling down the elevator shaft in case of breakage or any other mishap of the travelling cable.

### SUMMARY

In accordance with a first aspect, an elevator system is provided. The elevator system comprises an elevator cabin guided by or around one or more substantially rigid guiding elements. The elevator system further comprises a travelling cable, a pulley mounted on a pulley frame, wherein the pulley with the pulley frame is movably suspended on the travelling cable, and one or more transverse elements. The transverse element extends from a first end attached to the pulley frame to a second end configured to be slidably arranged with respect to one or more of the rigid guiding elements. The elevator system further comprises an arresting system provided at or near the second end of the transverse elements. The arresting system is configured to apply friction on the rigid guiding elements to reduce sliding of the transverse elements with respect to the rigid guiding elements when the pulley with the pulley frame is not suspended by the travelling cable.

According to this aspect, if something happens to the travelling cable during use of the elevator system that leads to the travelling cable pulley frame falling, the arresting system applies a friction force on the rigid guiding elements thereby stopping or at least reducing the sliding of the transverse element with respect to the rigid guiding element. Further, since the transverse element is fixed to or integrally formed with the pulley frame such a friction force also stops (or at least reduces) the pulley with the pulley frame falling. The arresting system can act directly on the rigid guiding element. A safer elevator system which does not hinder the self-travelling of the pulley with the pulley frame along the travelling cable is thus provided.

Put in other words, since the transverse elements are fixed to the pulley frame at their first end and to the arresting system at their second end, in the event e.g. the travelling cable breaks, the arresting system generates a friction force against the rigid guiding element that reduces (or stops) an uncontrolled falling-down the elevator shaft of the pulley with the pulley frame. A pivoting movement or rotation of the transverse elements about their second end might be used to activate the arresting system.

Furthermore, an arresting system substantially as hereinbefore described may be easily retrofit onto existing elevator systems as long as they have transverse elements or any other similar type of "separator" configured to maintain a distance between the travelling cable and the rigid guiding element. Last but not least, an arresting system substantially as hereinbefore described may be fitted in a relatively small area as it is the elevator shaft.

Throughout the present disclosure, an elevator shaft is to be understood as a space or passage through which the elevator can travel upwards and downwards. In a wind turbine tower, the elevator shaft is thus defined inside the tower. There may be a closed space inside the tower along which the cabin travels. Alternatively, the space inside the tower may be open.

Throughout the present disclosure, a pulley is to be understood as covering any form of wheel or roller that guides or redirects a cable along its circumference. Pulley herein thus covers e.g. sheaves with a specific groove around its circumference between two flanges, but also any other form of cable guiding wheel.

The rigid guiding elements may have an inner side facing the pulley frame and an outer side opposite to the inner side.

In some examples, the arresting system may comprise one or more brake pads fixedly arranged at or near the second end of the transverse element. The brake pads may face the inner and/or outer side of the rigid guiding elements. When the pulley with the pulley frame is suspended from the travelling cable, the brake pads are in a free-running position with respect to the rigid guiding elements and the transverse element freely slides with respect to the rigid guiding elements, and when the pulley with the pulley frame is not suspended from the travelling cable (e.g. because it is falling), the brake pads are brought in a frictional contact position with respect to the rigid guiding element due to the rotation of the transverse elements about their second end.

In these cases, when there is an incident with the travelling cable, the pulley loses its stability, the transverse element pivots about its second end (the end of the transverse element that is configured to be slidably arranged with respect to the rigid guiding element) thereby positioning the brake pads in the frictional contact position with respect to the rigid guiding elements. It is a passive system which does not need external power in order to act but merely uses rotation of the transverse element about its second end due to any mishap in the travelling cable to position the brake pads in frictional contact with the rigid guiding element and generate the friction force.

In some examples, an upper brake pad may be fixedly arranged in a top part of the second end of the transverse element and may face the outer side of the rigid guiding element. In these cases, when the pulley with the pulley frame is suspended from the travelling cable, the upper brake pad is in a free-running position with respect to the rigid guiding element and the transverse element freely slides with respect to the rigid guiding element, and when the pulley with the pulley frame is not suspended from the travelling cable, the upper brake pad that is fixed to the top part of the second end of the transverse element is brought in a frictional contact position with respect to the outer side of the rigid guiding element.

In these cases, a rather simple construction is thus provided, as only the provision of an upper brake pad arranged in a top part of the second end of the transverse element facing the outer side of the rigid guiding element is required. It is a passive system which does not need external power in order to act but merely uses e.g. the weight of the pulley mounted on the pulley frame and rotation of the transverse element as a consequence of such a weight to position the upper brake pad in frictional contact with the rigid guiding element and generate the friction force. As mentioned above, such a friction force stops or at least reduces sliding of the transverse element (and the pulley with the pulley frame mounted at its first end) when e.g. the travelling cable breaks. It is quite a cost-effective system.

In these cases, by merely fixing an upper brake pad in a top part of the second end of the transverse element facing the outer side of the rigid guiding element, the arresting system can be easily retrofit onto existing elevator systems involving transverse elements substantially as hereinbefore described. In some examples, a lower brake pad may be provided in a bottom part of the second end of the transverse element and faces the inner side of the rigid guiding element. By the same rotating movement, the lower brake pad may also be brought into contact with the rigid guiding element.

In some examples, the arresting system may comprise a sensor for detecting a mishap on the travelling, and one or more movable brake pads. The movable brake pads may be movably mounted at or near the second end of the transverse elements and may be configured to press on the rigid guiding elements when something happens to the travelling cable is detected. In these cases, a detected mishap of the travelling cable triggers movement of the pads towards the rigid guiding elements so as to provide a friction force that stops or at least reduces e.g. sliding of the transverse element along the rigid guiding element. This reduces or stops an uncontrolled falling-down the elevator shaft of the pulley with the pulley frame e.g. when the travelling cable breaks.

In a further aspect, the present disclosure provides a wind turbine comprising an elevator system substantially as hereinbefore described arranged within a wind turbine tower.

In yet a further aspect, the present disclosure provides a method for retrofitting an elevator system comprising an elevator cabin guided by or around one or more substantially rigid guiding elements, a travelling cable, a pulley mounted on a pulley frame that is movably suspended on the travelling cable, and one or more transverse elements. The transverse element extends from a first end attached to the pulley frame to a second end configured to be slidably arranged with respect to one or more of the rigid guiding elements. The method comprises providing an arresting system at or near the second end of the transverse elements. The arresting system is configured to apply friction on the rigid guiding elements to reduce sliding of the transverse elements with respect to the rigid guiding elements when the pulley with the pulley frame is not suspended by the travelling cable.

According to this method, existing elevator systems may be retrofitted to add the additional functionalities substantially as hereinbefore described.

### BRIEF DESCRIPTION OF THE DRAWINGS

Non-limiting examples of the present disclosure will be described in the following, with reference to the appended drawings, in which:
Figure 1 shows a partial side view of a wind turbine tower with an elevator system comprising a travelling cable;
Figure 2 shows a perspective of a service elevator system comprising an arresting system according to an example;
Figure 3 shows a partial perspective view of the elevator system of figure 2;
Figures 4a and 4b show the arresting system of figure 3 in two states; and
Figure 5 shows another example of second ends of transverse element.

### DETAILED DESCRIPTION OF EXAMPLES

In these figures the same reference signs have been used to designate matching elements.

Figure 1 shows a partial side view of e.g. a wind turbine tower 1 with an elevator system comprising a cabin 2. The elevator system comprises a travelling cable 3 suspended at one end 31 from the elevator cabin 2 and at the other end 32 from a fixed point FP along the elevator shaft. The fixed point may be a point of attachment to the wind turbine tower 1, or e.g. to a platform arranged within the tower.

In between the elevator cabin 2 and the fixed point FP along the elevator shaft, the travelling cable 3 passes around a pulley 4 (or pulley system) so as to add tension to the travelling cable. This way, the travelling cable is always hanging, either during movement of the elevator as well as when the elevator is still at e.g. a bottom parking position.

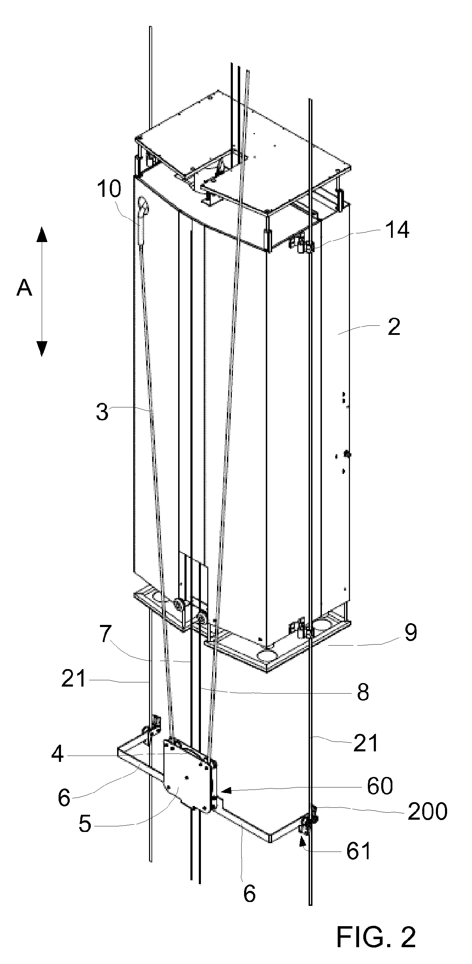

Figure 2 shows an elevator system according to an example. The elevator system comprises an elevator cabin 2 configured to move up and down (arrow A) inside an elevator shaft (not shown) driven by a traction wire rope 7. In alternative examples, more than one traction wire rope may be provided. In the example of figure 2 a safety wire rope 8 is further provided.

The elevator cabin 2 in this example is guided by a pair of taut cables 21 running laterally from the elevator cabin 2. The taut cables are under tension. Due to this tension they become relatively rigid and thus suitable as a cabin guiding means. In alternative examples, other rigid guiding elements may be foreseen such as e.g. a ladder or a guide rail arranged inside an inner surface of an elevator shaft.

Further in this example, the elevator cabin 2 is provided with cable guiding means 14 that may be selected from the group consisting of a tubular part, a ring or an eyelet, a substantially C-shaped profile, a pair of rollers or similar. In this example, two cable guiding means 14 are arranged at each side of the elevator cabin, one closer to an upper portion of the cabin 2 and another closer to a lower portion of the cabin 2. Alternatively, more cable guiding means may be provided or even a single one as a function of the size of the elevator cabin as long as there are guiding means at both sides of the elevator cabin for guiding the pair of taut cables.

A travelling cable 3 is further provided for supplying e.g. energy and/or signals to the elevator cabin 2. The travelling cable 3 is connected to a power supply at one end (not shown), arranged at some fixed point along the elevator shaft and to the elevator cabin 2 at the other end as explained in connection with figure 1. In case e.g. of an elevator system for a wind turbine the elevator shaft may be defined within the wind turbine tower. The height at which the travelling cable is mounted may be at approximately half the total height of the elevator shaft, or in case of a wind turbine tower, at approximately half the total height of the tower. The power supply may be provided at any height in the elevator shaft.

A cable stocking 10 or similar may further be provided for aiding cable hauling when in use. In some examples, each end of the travelling cable may be provided with a cable stocking.

Furthermore, a pulley 4 mounted on a pulley frame 5 is arranged in a movably suspended manner on the travelling cable 3. Extending laterally from the pulley frame 5, the elevator system of these examples comprises two transverse arms 6. Each transverse arm 6 extends from a first end 60 fixed to the pulley frame 5 to a second end 61 that is adapted to be slidably arranged with respect to the taut cables 21. In this example, each transverse arm 6 extends substantially perpendicular to an up and down direction of motion of the elevator cabin 2 (see arrow A). In alternative examples, a single transverse arm may be foreseen. An aspect of using a single transverse arm is that it may be less costly.

In some cases, the transverse arms may be made with the pulley frame as an integral piece or they may be welded to the pulley frame. In other cases, they may be fixed to the pulley frame by e.g. screws or bolts.

Further in this example, the second ends 61 of the transverse arms 6 are provided with an arresting system 200 configured to apply friction on the taut cables 21 when the pulley with the pulley frame 5 is not suspended by the travelling cable 3.

Further in this example, the pulley frame 5 provided with transverse arms 6 serves as a guide for the traction 7 and safety 8 wire ropes of the elevator system. In alternatives, the pulley frame may be adapted for guiding a single one of the traction and safety wire ropes or even none of them. And the elevator cabin 2 further comprises feet 9 made e.g. of rubber, providing a distance between a bottom portion of the elevator cabin and a bottom platform floor when the elevator cabin reaches the bottom platform floor.

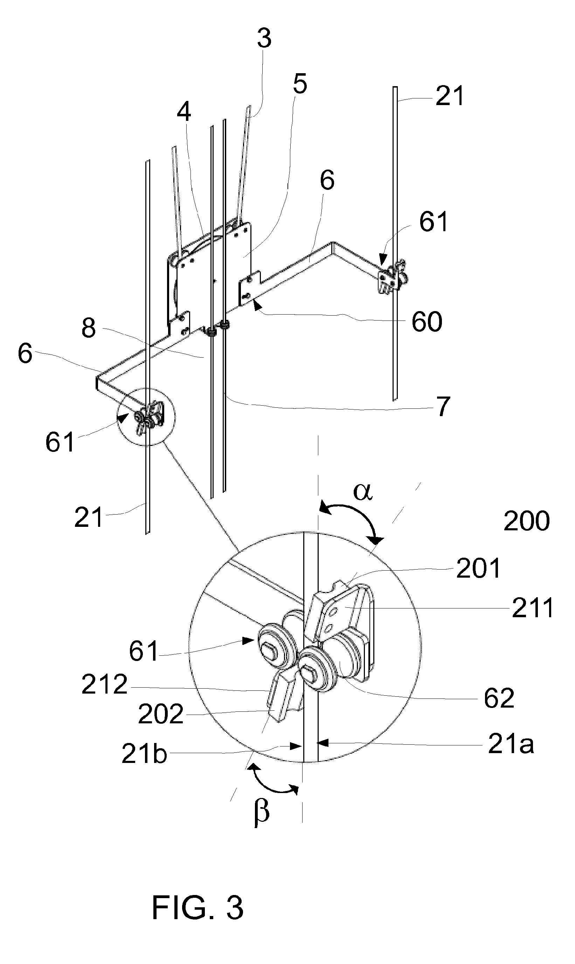

Figure 3 shows a partial perspective view of the elevator system of figure 2. Figure 3 particularly illustrates the pulley 4 and pulley frame 5 provided with transverse arms 6 and the arresting system 200 provided at the second end 61 of the transverse arms 6. As shown in the enlarged detail of figure 3, the taut cables 21 comprise an inner side 21 b facing the pulley frame 5 and an outer side 21 a that is opposite to the inner side 21 b.

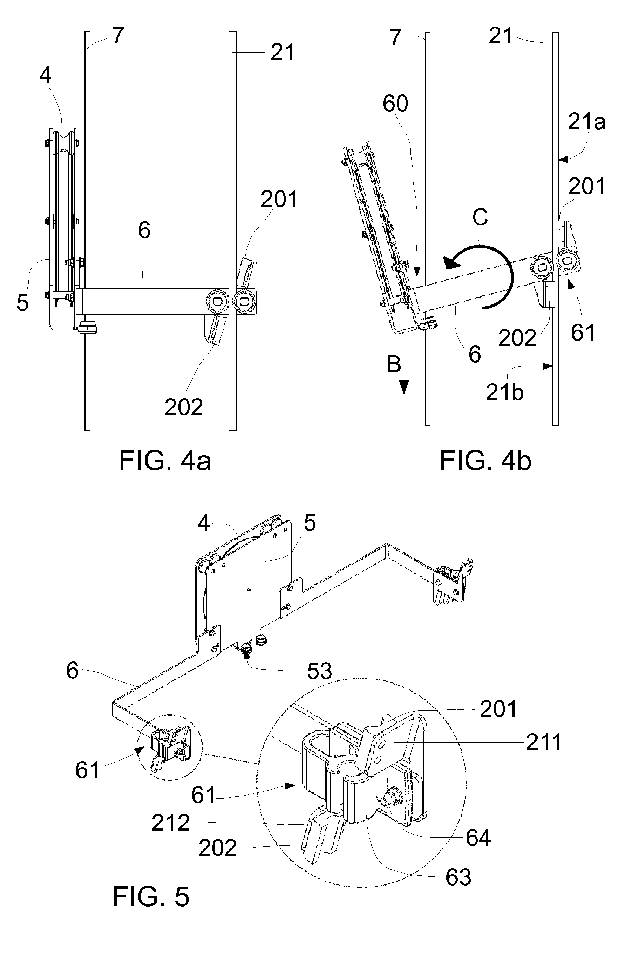

As further shown in the enlarged detail of figure 3, the second end 61 of the transverse arms 6 comprises a pair of runners 62 arranged to slide along the taut cables 21 (or any other type of rigid guiding element that may be foreseen in further alternatives). In further alternatives, other ways of adapting the second end of the transverse arms in order to be slidably arranged with respect to the rigid guiding element may be foreseen. See figure 5.

The enlarged detail of figure 3 also shows that the arresting system 200 comprises two brake pads 201, 202. A first pad 201 is fixedly mounted in a top part (i.e. facing an upwards direction of the up and down movement A of the elevator cabin along the elevator shaft) of the second end 61 of the transverse arm 6. The first pad 201 faces the outer side 21 a of the taut cable 21. A second pad 202 is fixedly mounted in a bottom part of the second end 61 of the transverse arm 6. The second pad 202 faces the inner side 21 b of the taut cable 21. In alternative examples, only a single pad may be used.

Further in this example, the first pad 201 is mounted in a support 211 that provides the first pad 201 at an angle α with respect to the taut cable 21 and the second pad 202 is mounted in another support 212 that provides the second pad 202 at an angle β with respect to the taut cable 21. The supports 211, 212 may be bolted, welded, integrally formed or otherwise attached to the second end 61 of the transverse arm 6 so as to integrally move with the transverse arm 6.

The angles α, β may be determined by taking into account *inter alia* a weight of the pulley with pulley frame, and/or a length of the transverse arm, and/or an orientation of the transverse arms with respect to the taut cable (rigid guiding element).

Figures 4a and 4b show the arresting system of figure 3 in two different states. Figure 4a shows a state in which the pulley 4 and pulley frame 5 are suspended from the travelling cable (not shown) and figure 4b shows a state in which the travelling cable is broken thus the pulley 4 and pulley frame 5 are no longer suspended on the travelling cable (not shown).

In this example, in figure 4a, the transverse arm 6 is thus maintained in a substantially horizontal position, including a position substantially perpendicular to the taut cable 21 (rigid guiding element). The fact that the travelling cable supports the pulley with the pulley frame ensures that the transverse elements are provided in a substantially horizontal plane with respect to the rigid guiding elements. Or what is the same, the transverse elements lie in a plane substantially perpendicular to the up and down movement of the elevator cabin. In this case, the brake pads 201, 202 do not contact the taut cable 21.

However, in figure 4b, i.e. when the pulley 4 and pulley frame 5 are no longer suspended from the travelling cable, e.g. because a rupture of the travelling cable has occurred, a weight of the pulley 4 with the pulley frame 5 pushes down (arrow B) the first end 60 of the transverse arm 6. Thus, the transverse arm 6 rotates (arrow C) about its second end 61 thereby positioning the pads 201, 202 in frictional contact with the taut cable 21 (respectively with its outer side 21 a and inner side 21 b). This means that when the travelling cable no longer supports the pulley frame with pulley, the weight of the pulley frame and pulley that are fixed to the first end of the transverse elements involves rotation of the transverse elements about their second ends. Such a rotation entails movement of the brake pads that are provided at the second end of the transverse elements. In this case, the brake pads make frictional contact with the taut cable.

Figure 5 shows a further example for adapting the second ends 61 of transverse arms 6 such that they are slidably arranged with respect to a rigid guiding element. In this example, the second end 61 comprises a substantially C-shaped guide 63 that may be fixed to the second end 61 of the arm 6 by e.g. screws 64. Alternatively, it may be glued or welded. Other shapes or supports may also be foreseen for the second ends of the transverse arm as long as they may be adapted to be slidably mounted with respect to a cable, a ladder or a guide rail depending on circumstances. For example, an eyelet or a pair of rollers may be foreseen.

In all examples, the pulley frame 5 may further comprise at least one flange provided with e.g. two holes 53 (see figure 5) for limiting movement of the traction and/or safety ropes of the elevator system. In alternative examples, other number of holes may be provided. In some cases the flange may be integrally formed with the pulley frame 5. In others, it may be welded or it may be fixed with screws to the pulley frame.

In more examples, the pulley frame may comprise wedge shaped guiding elements. Document EP2826742 describes such elements. This way, as the pulley frame moves upwards and encounters e.g. a flange of a junction between two tower sections, the wedge shaped elements can help the pulley frame to slide over such a junction. Similar wedge shaped guiding elements may further be provided e.g. at the bottom and/or a back side of the pulley frame for the same reasons. These wedge shaped guiding elements thus act as runners gliding along an inner surface of e.g. a wind turbine tower.

In more examples, a ladder (not shown) may further be provided and the elevator cabin may be guided around the ladder by the taut cables. In more examples, a guide rail (not shown) may be arranged on an inner surface of the elevator shaft for guiding the elevator cabin.

In all examples, the brake pads may be made of rubber, silicone, foam or any other synthetic elastomeric material able to withstand friction forces.

In some examples, the arresting system may comprise a sensor for detecting rupture of the travelling cable and one or more movable brake pads movably mounted at the second end of the transverse elements. The movable brake pads may be configured to press on the rigid guiding elements when a mishap of the travelling cable is detected. Alternatively, a clamping system may be provided able to clamp on the rigid guiding elements.

In these examples, the sensor for detecting rupture of the travelling cable may be a force or tautness sensor configured to detect a longitudinal force in the cable. Alternatively, an accelerometer or an overspeed sensor may be used for detecting e.g. that the pulley frame with the pulley is falling.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. An elevator system comprising:
an elevator cabin guided by or around one or more substantially rigid guiding elements,
a travelling cable,
a pulley mounted on a pulley frame, wherein the pulley with the pulley frame is movably suspended on the travelling cable, and
one or more transverse elements, the transverse element extending from a first end attached to the pulley frame to a second end configured to be slidably arranged with respect to one or more of the rigid guiding elements, wherein the elevator system further comprises
an arresting system provided at or near the second end of the transverse elements, the arresting system configured to apply friction on the rigid guiding elements to reduce sliding of the transverse elements with respect to the rigid guiding elements when the pulley with the pulley frame is not suspended by the travelling cable.

2. The elevator system of claim 1, wherein the rigid guiding elements has an inner side facing the pulley frame and an outer side opposite to the inner side, and wherein the arresting system comprises one or more brake pads fixedly arranged at or near the second end of the transverse element, the brake pads facing the inner and/or outer side of the rigid guiding elements such that
when the pulley is suspended from the travelling cable, the brake pads are in a free-running with respect to the rigid guiding elements and the transverse elements freely slide with respect to the rigid guiding elements, and
when the pulley is not suspended from the travelling cable, the brake pads are in a frictional contact position with respect to the rigid guiding elements.

3. The elevator system of claim 2, wherein an upper brake pad is fixedly arranged in a top part of the second end of the transverse element and faces the outer side of the rigid guiding element.

4. The elevator system of claims 2 or 3, wherein a lower brake pad is fixedly arranged in a bottom part of the second end of the transverse element and faces the inner side of the rigid guiding element.

5. The elevator system of claim 1, wherein the arresting system comprises a sensor for detecting mishaps of the travelling cable, and one or more movable brake pads, the movable brake pads being movably mounted at the second end of the transverse elements and being configured to press on the rigid guiding elements when a mishap of the travelling cable is detected.

6. The elevator system of claim 5, wherein the sensor for detecting mishaps of the travelling cable is a force or tautness sensor configured to detect a longitudinal force in the cable.

7. The elevator system of any of claims 2 - 6, wherein the brake pads are made of rubber, silicone, foam or any other synthetic elastomeric material able to withstand friction forces.

8. The elevator system of any of claims 1 - 7, wherein the second end of the transverse elements is selected from the group consisting of a pair of rollers, an eyelet or a substantially C-shaped profile.

9. The elevator system of any of claims 1 - 8, wherein the elevator system comprises two transverse elements attached to laterally opposite sides of the pulley frame.

10. The elevator system of any of claims 1 - 9, wherein the rigid guiding element is a pair of taut cables running laterally from the elevator cabin or a ladder arranged on an inner surface of an elevator shaft or a guide rail arranged on an inner surface of an elevator shaft.

11. The elevator system of claim 10, wherein the pulley frame is further provided with runners arranged such that in use the runners ride or glide on an inner surface of an elevator shaft.

12. The elevator system of any of claims 1 - 11, wherein the elevator cabin is driven by one or more traction wire ropes and the pulley frame is further adapted for guiding at least one traction wire rope or a safety wire rope of the elevator system.

13. The elevator system of any of claims 1 - 10, wherein the elevator cabin is driven by a rack and pinion engagement.

14. A wind turbine comprising an elevator system according to any of claims 1 - 13 arranged within a wind turbine tower.

15. A method for retrofitting an elevator system comprising
an elevator cabin guided by or around one or more substantially rigid guiding elements,
a travelling cable,
a pulley mounted on a pulley frame, wherein the pulley with the pulley frame is movably suspended on the travelling cable, and
one or more transverse elements extending from a first end attached to the pulley frame to a second end configured to be slidably arranged with respect to one or more of the rigid guiding elements,
the method comprising:
providing an arresting system at or near the second end of the transverse elements, the arresting system being configured to apply friction on the rigid guiding elements to reduce sliding of the transverse elements with respect to the rigid guiding elements when the pulley with the pulley frame is not suspended by the travelling cable.
